Europäisches Patentamt

European Patent Office

Office européen des brevets

(11) Publication number: **0 034 033**
**B1**

# EUROPEAN PATENT SPECIFICATION

(45) Date of publication of patent specification: **27.11.85**

(21) Application number: **81300432.2**

(22) Date of filing: **02.02.81**

(51) Int. Cl.⁴: **G 05 B 19/12, G 05 B 19/18**

(54) Electric motor drive control system.

(30) Priority: **01.02.80 JP 11659/80**

(43) Date of publication of application:
**19.08.81 Bulletin 81/33**

(45) Publication of the grant of the patent:
**27.11.85 Bulletin 85/48**

(84) Designated Contracting States:
**DE FR GB IT**

(56) References cited:
**GB-A-1 249 433**
**US-A-4 115 859**
**US-A-4 129 813**
**US-A-4 153 863**

**DESIGN ENGINEERING, vol. 51, no. 4 april 1980, London, GB "New Ac servo provides precise control of slide motions", pages 13, 14**
**ELEKTRIE, vol. 32, no. 5, 1978, Berlin, DD U. RIEFENSTAHL:"Einsatz von Microrechnern zur Steuerung und Regelung elektrischer Antriebssysteme", pages 245-248**

(73) Proprietor: **INOUE-JAPAX RESEARCH INCORPORATED**
**5289 Aza Michimasa Nagatsudamachi Midoriku Yokohamashi Kanagawaken (JP)**

(72) Inventor: **Inoue, Kiyoshi**
**3-16-8 Kamiyoga Setagayaku**
**Tokyo (JP)**

(74) Representative: **Saunders, Harry**
**SAUNDERS AND DOLLEYMORE European Patent Attorneys 2 Norfolk Road Rickmansworth Hertfordshire WD3 1JH (GB)**

Courier Press, Leamington Spa, England.

# Description

The present invention relates to a motor drive control system and, more particularly, an improved control system for driving a motor to perform a desired displacement with an increased degree of precision and operating stability.

A conventional drive control system for a motor may be equipped with a tacho-generator connected to the motor shaft for providing an electric signal. This isgnal may be used as a feed-back signal and applied to a driver circuit for controlling the rate of rotation or angular velocity of the motor in an attempt to increase the operating stability and precision of the motor. The tacho-generator can, however, be a significant load for the motor system and may seriously cause a drop of response thereby to an input drive signal.

It is accordingly an important object of the present invention to provide an improved drive control system for operating a motor, which system eliminates the use of a tacho-generator or the like high sensing load and which is a capable of driving the motor with an increased rate of response to an input displacement command signal and with increased operating precision and stability.

In accordance with the present invention, as claimed, there is provided a drive control system for a motor, comprising: a driver circuit for the motor; a signal input unit for receiving an input command signal representing a desired extent of angular displacement of the motor; a microcomputer having an input/output interface connected between the signal input unit and the driver circuit and a central processing unit or microprocessor for producing a control command signal in accordance with the input command signal and applying the control command signal to the driver circuit, thereby providing from the latter a drive signal for the motor in accordance with the control command signal; an encoder for sensing an angular displacement of the motor being achieved by the drive signal and producing a succession of pulses representing the angular displacement being sensed; logic-circuit means connected between the encoder and the input/output interface for applying to the microprocessor a feed-back signal at least derived from the output pulses of the encoder to modify the control command signal and consequentially the drive signal; and an interrupt unit associated with the microcomputer for intermittently providing an interrupt signal to the central processing unit thereby permitting the latter to execute the modification of the control command signal.

The driver circuit is preferably adapted to provide, as the drive signal, a series of drive pulses having an on-time $\tau on$ and off-time $\tau off$ at least one of which is variable. The on-time $\tau on$ and/or off-time $\tau off$ may be varied controlledly by the afore-mentioned modification of the control command signal in the microprocessor.

The signal input unit is preferably adapted to issue a succession of input command pulses defining the input command signal.

The logic-circuit means may include a differential counter responsive to the input command pulses and to the output pulses of the encoder for producing an output signal representing a difference therebetween and applying the output signal through the interface to the central processing unit to form the control command signal therein.

The logic-circuit means may further include a second differential counter responsive to the output pulses of the encoder and to a reference signal in the form of a succession of reference pulses furnished from the central processing unit through the input/output interface for providing an output signal representing a difference between the encoder output pulses and the reference pulses, the output signal of the second differential counter being returned through the interface to the microprocessor to produce the afore-mentioned modification of the control command signal.

These and other objects, features and advantages of the present invention will become more readily apparent from the following description of a preferred embodiment thereof taken with reference to the accompanying drawing in which:

FIG. 1 is a block diagram illustrating a drive control system for a motor which embodies the principles of the present invention;

FIG. 2 is a longitudinal view in section diagrammatically illustrating the structure of a motor which may be used with the system of FIG. 1; and

FIG. 3 is an elevational view diagrammatically illustrating an electrical machining feed arrangement with a motor for embodying the system of the invention.

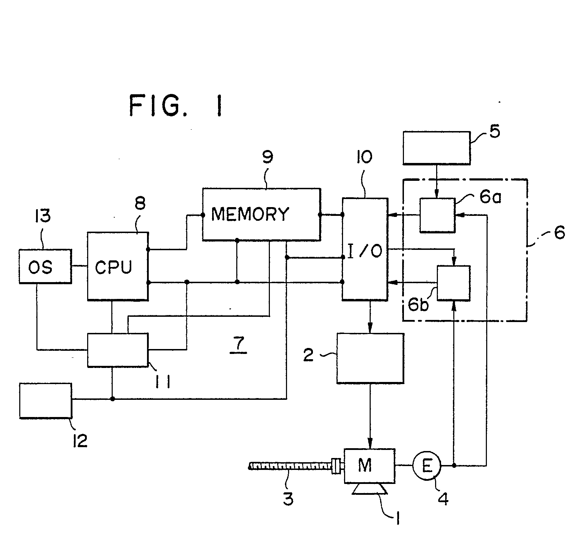

In the system shown in FIG. 1, a motor designated at 1 is rotated in response to a drive signal furnished by a driver circuit 2 which may be constituted as a power amplifier. A feed screw 3 is securely coupled to the rotary shaft of the motor 1 and used to carry a load not shown. The motor 3 is equipped with an encoder 4 for sensing the angle of rotation of the motor 1 shaft to provide an output signal in the form of digital pulses proportional in number to the value of the instantaneous sensed angle of rotation. A displacement command signal (e.g. in the form of a succession of pulses) to the system representing a desired extent of rotation is set at an input unit 5. A logic circuit unit 6 includes a first differential counter $6a$ which provides a difference between the input value of rotation at the input signal unit 5 and the sensed value of rotation being furnished by the encoder 4, and a second differential counter $6b$ which provides a difference between a reference value and the sensed value of rotation being furnished by the encoder 4. A microcomputer 7 is provided for computing from the input signal at the unit 5 an optimum velocity for the rotation of the motor 1 in accordance with the desired extent of rotation and includes a microprocessor or central processing unit (CPU) 8, a memory unit 9 and an input/output interface 10. A system controller 11 is provided for the central processing unit 8. An interrupt unit 12 is coupled to the controller 11 and the memory 9 to permit an interrupt to be accomplished at a preprogrammed time interval. A clock for the microcomputer 7 is shown at 13.

A desired extent for the rotation of the motor 1 is set at the signal input unit 5. The set value in the form of a succession of pulses is transmitted via the first differential counter 6a to the microprocessor 7. The value is read by the central processing unit 8 successively in accordance with control signals furnished by the system controller 11 and is thereby processed to calculate an optimum velocity for the rotation or angular displacement of the motor 1. A signal in the form of pulses representing the optimum velocity is produced at the input/output interface 10 and applied via the amplifier/driver circuit 2 to the motor 1. The encoder 4 rotates with the motor 1 shaft and provides a digital signal representing the driven rotation of the motor 1. The number of pulses furnished denotes the driven angular displacement of the motor 1. The number of pulses furnished per unit time denotes the angular velocity or the rate of driven rotation of the motor 1. The difference between the input command from 5 and the encoder 4 output is provided by the differential counter 6a in the logic circuit 6 and is applied to the microcomputer 7 through the interface 10. The central processing unit 8 in the microcomputer 7 processes the differential signal to furnish through the driver circuit 2 the drive signal for controlledly rotating the motor 1. Meanwhile, the differential counter 6b in the logic circuit 6 is furnished with the reference value calculated by the central processing unit 8 and transmitted through the interface 10 to the provide the difference between the reference value and the encoder 4 sensed output, the differential signal being then furnished through the interface 10. The central processing unit 8 responds to the differential signal to calculate a duty factor of drive pulses such as to make the difference nil or such that the sensed velocity approaches the optimum value established and to furnish the drive pulses with the calculated duty factor to the motor 1 through the driver circuit 2.

The drive signal is a succession of pulses with an on time $\tau$on and an off-time $\tau$off, one or both of which may be varied at the driver circuit 2, and a period = $\tau$on + $\tau$off which may be constant. Assuming that the period is constant, the increase of the duty factor $\tau$on/$\tau$off provides a higher rate of rotation of the motor 1 and the decrease of the duty factor $\tau$on/$\tau$off provides a lower rate of rotation of the motor 1. An optimum duty factor is thus calculated in the central processing unit 8 in accordance with the output signal from the differential counter 6a and the drive pulses are modified at the driver circuit 2 to have the optimum duty factor determined.

Assume, for example, the mode of controlling an angular position of the motor 1. When an input command to this end is received at the input signal unit 5, the driver circuit 2 will operate to commence driving the motor 1 towards the end of achieving the commanded angular displacement. In the initial period of the rotation, the rate of rotation will be low and the velocity signal sensed by the encoder 4 will accordingly be a small value. As a result, the differential value which develops from the counter 6b will be large. Then the central processing circuit 8 each time an interrupt signal is incoming from the unit 12 will operate to determine a duty factor for the drive pulses such that the sensed velocity approaches the velocity range previously calculated and to command the drive circuit 2 that the drive pulses being applied to the motor 1 be modified to change the duty factor to the determined value. Thus, in the initial period, the drive pulses are controlled to increase the duty factor to increase the rate of rotation of the motor 1. As a consequence, a quick initiation of the rotation of the motor 1 is provided. Subsequent to the initial period, an increase in the rate of rotation of the motor 1 causes the encoder 4 to proportionally develop an increased rate of sensing pulses which in turn reduces the differential signal provided by the differential counter 6b. When the differential signal reduces to a lower limit or nil, the driver circuit 2 will be operated to produce the drive pulses of a reduced duty factor which are applied to the motor 1 to rotate it at a given angular velocity. The motor 1 will continue to rotate at the velocity which is held constant until it approaches the end of the commanded displacement. As this latter is approached, the differential signal from the counter 6a becomes smaller, causing the duty factor of the drive pulses to be modified to a lower value as a result of the computation at the CPU 8 and the consequential command to the drive circuit 2. The rate of rotation of the motor 1 is thus reduced. At this time, the reference value furnished to the differential counter 6b is controlled to be reduced to allow the motor 1 to continue to rotate as long as the differential output lies in a predetermined range. When the encoder 4 output becomes large so that the differential value is shifted outside that range, the central processing unit 8 will output a further duty-factor value for the drive pulses which is still lower to reduce the rate of rotation of the motor 1. In this manner, the motor 1 is capable of being stopped extremely precisely at the very position commanded at the input signal unit 5, having achieved the angular displacement under microcomputer's directed velocity control in the process.

Each time a displacement command signal is applied to the input unit 5, the system initiates the control cycle. In each cycle, the differential counter 6a compares the command pulses of the input unit 5 and the sensing pulses of the encoder 4 and continues to issue a drive command to the motor 1 via the driver/amplifier circuit 2 until the sensing pulses in number reach the command pulses. When the coincidence is reached indicating that the rotation of the motor 1 reaches the extent or angular position given by the input command signal, the drive command is terminated to stop the motor 1. During this cycle of operation, the CPU operates to control the drive signal issued from the driver/amplifier 2 to vary the rate of rotation of the motor 1 in an optimum mode in accordance with the extent of displacement given by the input command. To this end, the deviation of the velocity from a preselected range is ascertained from the sensing signal of the encoder 4. When a deviation occurs, the duty factor of the drive pulses is altered by the processing operation of the CPU 8 in response to an interrupt signal from the unit 12 so as to return the velocity to the preselected range. Thus, the motor 1 commences rotating rapidly and with an accelerated rate of response to promptly reach a steady operation. When the steady operation is reached, the motor 1 is subject to a minimum of velocity change due to a variation in the load. At the completion of the given extent of angular displacement, the motor 1 stops rapidly and with an accelerated rate of response and without any over-travel. The result is an extremely high accuracy in stopping the motor 1 at the desired angular position.

The signal input unit 5 may take any of various known forms. For example, data for a series of displacement commands may be memorized on a tape. A register may be used to memorize each unit of the data on the tape and to reproduce the same in the form of a succession of electrical pulses which are applied to the logic circuit 6. Alternatively, ROM and/or RAM may be used for the storage of the data which are reproduced by a selection circuit to provide a succession of electrical pulses to be applied to the logic circuit 6. In electrical discharge machining (EDM), a displacement command signal in the form of a succession of electrical pulses is produced in a servocontrol circuit connected to detect a parameter in the EDM gap formed between a tool electrode and a workpiece one of which is to be moved by the operation of the motor 1 to follow up the material removal process therein.

The displacement command signal applied to the signal input unit may also be a time signal for determining the time in which the motor 1 is driven and thereby determining an extent of the rotation thereof. In this case as well, the rate of rotation or angular velocity is controlled in response to a change in the load in an optimum manner by applying the velocity detection signal of the encoder 4 to the CPU 8. The processing operation of the CPU 8 provides an in-process correction of the drive signal such that the motor 1 is rotated at a predetermined angular velocity in spite of a change in the load and hence with an increased stability of operation.

The interrupt unit 12 as described previously provides an interrupt signal periodically or with predetermined time intervals. The time interval may optionally be taken and may be varied. When an interrupt signal is accepted, a velocity signal derived from the encoder 4 is applied to the output from the interface 10 to the driver circuit 2.

The CPU 8 performs the computation of an error from the desired displacement command and, when the result is found to be in the predetermined range, stops the operation without altering the duty factor of the control output. If the result is found to be outside the range, the CPU 8 proceeds to alter the duty factor, thereby modifying the angular velocity of the motor 1. This checking and modification operation is performed at predetermined or varying time intervals so that the rate of rotation is automatically held to be optimum with respect to the desired extent of angular displacement. The system controller 11 may be arranged to allow the interrupt signal from the unit 12 to be passed to the CPU 8 to permit the modification of the drive signal when the feed-back signal from the logic circuit 6 exceeds a predetermined value.

The velocity modification with the drive signal or pulses may be achieved by holding the on-time $\tau$on constant while varying the off-time $\tau$off thereof, holding the off-time $\tau$off constant while varying the on-time $\tau$on thereof, or varying both the on-time $\tau$on and the off-time $\tau$off thereof. The modification of the pulse parameters for controlling the motor drive in this manner is extremely advantageous in accomplishing the control of both position and velocity with readiness and with precision. The encoder 4 may be any of the optical, induction and magnetic types well known in the art, which are capable of digitization of a continuous angular displacement, thereby permitting both position and velocity of the motor shaft to be accurately sensed.

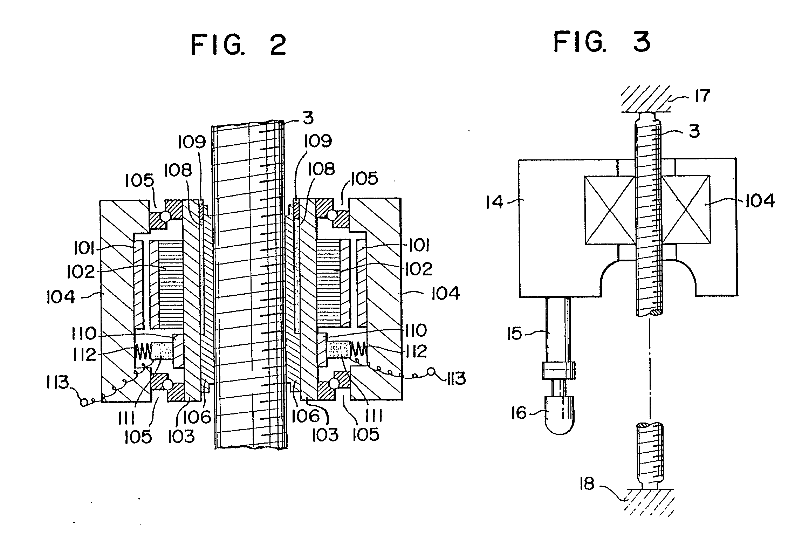

In FIG. 2 there is shown in longitudinal section a novel structure of the motor 1 which may be used with the system of FIG. 1. The structure includes a stator 101 constituted by a permanent magnet and a rotor 102 having a coil wound thereon and mounted on a cylinder 103. The cylinder 103 is coupled with a fixed member 104 via a bearing 105 and thereby rotatably journaled on the member 104. A nut 106 is secured to the inner wall of the cylinder 103 and is rotated therewith. The feed screw 3 is shown in engagement with the nut 106 and is used to convert the rotation of the nut 106 into a linear movement. The coupling between the rotary cylinder 103 and the rotary nut 106 is formed with a pocket 108 filled with a pressure medium, e.g. oil or elastomeric material, for adjusting the coupling of these members. A screw 109 is threaded onto the nut 106 and the cylinder 103 to adjustably compress the pressure medium in the pocket 108. Commutators 110 are secured to the outer wall of the cylinder 103 and are positioned in contact with brushes 111 urged thereagainst under the pressure produced by springs 112 and energized from terminals 113, respectively, with a motor drive signal produced by the system of FIG. 1.

FIG. 3 shows in elevation an electrical machining (e.g. electrical discharge machining) arrangement for controlledly driving a tool head 14 to which a machining tool electrode 16 is secured via a supporting spindle 15, the head 14 being displaced vertically to move the tool electrode 16 towards and away from a workpiece (not shown) juxtaposed therewith across a machining gap. To this end, the fixed member 104 in FIG. 2 is secured to the tool head 14 and is linearly moved along the axis of the feed screw 3 when the nut 106 is rotated in the motor structure shown in FIG. 2. The feed screw 3 is shown to be supported between a pair of fixed positions 17 and 18 so as to be held against linear displacement.

## Claims

1. A control system for driving a motor (1) to perform a desired angular displacement comprising: a driver circuit (2) connected to drive the motor (1); a signal input unit (5) for receiving an input command signal representative of the extent of said desired angular displacement and generating a signal representing said desired extent of angular displacement; a microcomputer (7) having an input/output interface (10), connected to said driver circuit (2), and a central processing unit (8) for producing a (first) speed command signal and for applying said (first) speed command signal to said driver circuit (2) through said interface (10), thereby providing from said driver circuit (2) a (first) speed drive signal for said motor (1) in accordance with said desired extent of angular displacement; an angular encoder (4) for sensing an angular displacement of said motor (1) being produced by said (first) speed drive signal and for producing a signal representative of the sensed effective instantaneous angular displacement of said motor (10); logic circuit means (6) connected with said interface (10) and including: a differential circuit (6a + 6b), connected to said angular encoder (4) and said signal input unit (5), for receiving said signal generated by said signal input unit (5) and said signal produced by said angular encoder (4), to produce a differential signal and to apply said differential signal to said interface (10) to enable said central processing unit (8) to produce a modification signal to cause the microcomputer (7) to modify said (first) speed drive signal applied to said motor (1) by said driver circuit (2).

2. A control system according to Claim 1 wherein said signal representing said desired extent of angular displacement comprises a train of pulses, wherein said signal representative of the sensed effective instantaneous angular displacement of said motor comprises a succession of pulses and wherein said differential circuit comprises; a first differential counter (6a) connected to said angular encoder (4) and said signal input unit (5), for receiving said train of pulses from said signal input unit (5) and said succession of pulses from said angular encoder (4), for producing a signal representative of a first differential count of said pulses from said input unit (5) and said pulses from said angular encoder (4) and for applying said first differential count signal to said interface (10) to allow said central processing unit (8) to elaborate a first modification signal of said (first) speed command signal in accordance with said first differential count, thereby allowing the microcomputer (7) to modify said (first) speed drive signal applied to said motor (1) by said driver circuit (2); a second differential counter (6b) connected to said angular encoder (4) and to said interface (10) for receiving said (first) speed command signal in the form of speed reference pulses from said central processing unit (8) of said microcomputer (7) and said succession of output pulses from said angular encoder (4) and for producing a second differential count, said second differential count being a differential count of said speed reference pulses and of a number of said output pulses from said angular encoder (4) per unit time, said number of said output pulses per unit time denoting a value of the effective instantaneous angular speed of said motor (1), and for supplying said second differential count through said interface (10) to said central processing unit (8) of said microcomputer (7), thereby providing that said speed command signal to said driver circuit (2) is modified in accordance with said first and said second differential count; and an interrupt unit (12) associated with said microcomputer (7) for intermittently providing an interrupt signal to said central processing unit (8), thereby permitting said central processing unit (8) to execute said modification of said speed command signal to said driver circuit (2) in accordance with said first and said second differential count; said driver circuit (2) being adapted to provide, as said speed drive signal, a series of speed drive pulses having an on-time and off-time whereby at least one of which is controlledly varied by said speed command signal supplied to said driver circuit (2) as modified in accordance with said first and second differential count.

3. A motor system comprising; a control system according to Claim 1 or to Claim 2 and an electric motor assembly operated by said driver circuit (2), said electric motor assembly comprising: a feedscrew (3); an elongate nut (106) screw threadedly engaging said feedscrew (3) and extending axially therealong; a rotary cylinder (103) surrounding said nut (106) and defining therewith a fluid pressurisable pocket (108) to receive, as a medium under pressure coupling said rotary cylinder (103) with said nut (106), an oil or an elastomeric material; a screw (109) threaded on to said nut (106) and said rotary cylinder (103) for adjustably compressing the pressure medium in said pocket (108); a rotor (102) having a coil wound thereon and mounted on said rotary cylinder (103) for constituting a rotor winding; a cylindrical housing surrounding said rotary cylinder (103) and forming a stator cooperating with said rotor winding; commutators (110) secured to said rotary cylinder (103) within said housing and electrically connected to said rotor (102); and brushes (111) resiliently mounted in said housing, urged against said commutators (110) by springs (112) and energised from terminals (113) with said speed drive signal from said driver circuit (2).

## Revendications

1. Un système de commande pour entraîner un moteur (1) afin d'effectuer un déplacement angulaire désiré comprenant un circuit d'entraînement (2) connecté de manière à entraîner le moteur (1); une unité d'entrée de signal (5) pour recevoir un signal d'ordre d'entrée représentant l'amplitude du déplacement angulaire désiré et pour produire un signal représentant cette amplitude désirée du déplacement angulaire; un microcalculateur (7) ayant un interface d'entrée/sortie (10) connecté au circuit d'entraînement (2) et une unité de traitement central (8) pour produire un (premier) signal d'ordre de vitesse et pour appliquer ce (premier) signal d'ordre de vitesse au circuit d'entraînement (2), par l'intermédiaire de l'interface (10), de manière à fournir ainsi, à partir du circuit d'entraînement (2), un (premier) signal d'entraînement en vitesse pour le moteur (1) en accord avec l'amplitude désirée du déplacement angulaire; un codeur angulaire (4) pour détecter un déplacement angulaire du moteur (1) produit par le (premier) signal d'entraînement en vitesse et pour produire un signal représentant le déplacement angulaire instantané du moteur (10) effectivement détecté; un circuit logique (6) connecté à l'interface (10) et comportant un circuit différentiel (6a + 6b) connecté au codeur angulaire (4) et à unité d'entrée de signal (5), pour recevoir le signal produit par l'unité d'entrée de signal (5) et le signal produit par le codeur angulaire (4), afin de produire un signal différentiel et d'appliquer ce signal différentiel à l'interface (10) pour permettre à unité de traitement central (8) de produire un signal de modification amenant le microcalculateur (7) à modifier le premier signal d'entraînement en vitesse appliqué au moteur (1) par le circuit d'entraînement (2).

2. Un systeme de commande suivant la revendication 1 dans lequel le signal représentant l'amplitude désirée du déplacement angulaire comprend un train d'impulsion, le signal représentant le déplacement angulaire instantané du moteur effectivement détecté comprend une succession d'impulsions et le circuit différentiel comprend un premier compteur différentiel (6a) connecté au codeur angulaire (4) et à l'unité d'entrée de signal (5), pour recevoir le train d'impulsions provenant de l'unité d'entrée de signal (5) et la succession d'impulsions provenant du codeur angulaire (4), afin de produire un signal représentant un premier compte différentiel des impulsions en provenance de l'unité d'entrée de signal (5) et des impulsions en provenance du codeur angulaire (4), et pour appliquer ce premier signal de compte différentiel à l'interface (10), afin de permettre à l'unité de traitement central (8) d'élaborer un premier signal de modification du (premier) signal d'ordre de vitesse en accord avec le premier compte différentiel, en autorisant ainsi le microcalculateur (7) à modifier le (premier)

signal d'entraînement en vitesse appliqué au moteur (1) par le circuit d'entraînement (2); un second compteur différentiel (6b) connecté au codeur angulaire (4) et à l'interface (10) pour recevoir le (premier) signal d'ordre de vitesse sous la forme d'impulsions de vitesse de référence en provenance de l'unité de traitement central (8) du microcalculateur (7) et la succession d'impulsions de sortie provenant du codeur angulaire (4), et pour produire un second compte différentiel, ce second compte différentiel étant un compte différentiel des impulsions de vitesse de référence et d'un nombre des impulsions de sortie provenant du codeur angulaire (4) par unité de temps, ce nombre d'impulsions de sortie par unité de temps représentant une valeur de la vitesse angulaire instantanée effective du moteur (1), et pour appliquer ce second compte différentiel, par l'intermédiaire de l'interface (10), à l'unité de traitement central (8) du microcalculateur (7), ce qui assure ainsi que le signal d'ordre de vitesse appliqué au circuit d'entraînement (2) est modifié en fonction des premier et second comptes différentiels; et une unité d'interruption (12) associée au microcalculateur (7) pour délivrer par intermittence un signal d'interruption appliqué à l'unité de traitement central (8), afin de permettre à cette unité de traitement central (8) d'exécuter la modification du signal d'ordre de vitesse appliquée au circuit d'entraînement (2) en fonction des premier et second comptes différentiels; le circuit d'entraînement (2) étant adapté de manière à fournir, en tant que signal d'entraînement en vitesse, une série d'impulsions d'entraînement en vitesse ayant chacune une durée et d'une durée d'intervalle entre impulsions, l'une au moins de ces durées étant modifiée d'une manière commandée par le signal d'ordre de vitesse fourni au circuit d'entraînement (2) et modifié en fonction des premier et second comptes différentiels.

3. Un système de moteur comprenant un système de commande suivant le revendication 1 ou 2 et un ensemble de moteur électrique actionnné par le circuit d'entraînement (2), cet ensemble de moteur électrique comprenant: une vis d'alimentation (3); un écrou allongé (106) vissé sur la vis d'alimentation (3) et s'étendant axialement le long de celle-ci; un cylindre rotatif (103) entourant l'écrou (106) et définissant avec celui-ci une poche (108) pour un agent sous pression, laquelle peut recevoir, en temps qu'agent sous pression assurant l'accouplement entre le cylindre rotatif (103) et l'écrou (106), de l'huile ou un élastomère; une vis (109) vissée sur l'écrou (106) et le cylindre rotatif (103) afin de comprimer d'une manière réglable l'agent sous pression contenu dans la poche (108); un rotor (102) portant une bobine montée sur le cylindre rotatif (103) afin de constituer un enroulement rotorique; un boîtier cylindrique entourant le cylindre rotatif (103) et formant un stator coopérant avec l'enroulement rotorique, des collecteurs (110) fixés au cylindre rotatif (103) à l'intérieur du boîtier et connecté électriquement au rotor (102); et des balets (111) montés élastiquement dans le boîtier, pressés contre les collecteurs (110) par des ressorts (112) et alimentés à partir de bornes (113) pour recevoir le signal d'entraînement en vitesse provenant du circuit d'entraînement (2).

**Patentansprüche**

1. Steuersystem zum Antrieb eines Motors (1) zur Durchführung einer gewünschten Winkelverschiebung mit: einer mit dem Motor (1) verbundenen Treiberschaltung (2); einer Signaleingabeeinheit (5), die ein das Ausmaß der gewünschten Winkelverschiebung darstellendes Eingangsbefehlssignal empfängt und ein das gewünschte Ausmaß der Winkelverschiebung darstellendes Signal erzeugt; einem Mikrorechner (7), der eine Eingabe/Ausgabe-Schnittstelle (10), die mit der Treiberschaltung (2) verbunden ist, sowie eine Zentraleinheit (8) aufweist, die ein (erstes) Geschwindigkeitsbefehlssignal erzeugt und das (erste) Geschwindigkeitsbefehlssignal über die Schnittstelle (10) an die Treiberschaltung (2) anlegt, wodurch entsprechend dem gewünschten Ausmaß der Winkelverschiebung von der Treiberschaltung (2) ein (erstes) Geschwindigkeitsantriebssignal für den Motor (1) geliefert wird; einem Winkelkodierer (4), der eine von dem (ersten) Geschwindigkeitsantriebssignal erzeugte Winkelverschiebung des Motors (1) wahrnimmt und ein die wahrgenommene, wirksame, momentane Winkelverschiebung des Motors (11) darstellendes Signal erzeugt; einer Logikschaltungseinrichtung (6), die mit der Schnittstelle (10) verbunden ist und eine Differentialschaltung (6a + 6b) enthält, welche mit dem Winkelkodierer (4) und der Signaleingabeeinheit (5) verbunden ist und das von der Signaleingabeeinheit (5) erzeugte signal und das von dem Winkelkodierer (4) erzeugte Signal empfängt, um ein Differentialsignal zu erzeugen und das Differentialsignal an die Schnittstelle (10) anzulegen, um die Zentraleinheit (8) wirksam zu machen, damit sie ein Modifikationssignal erzeugt, um den Mikrorechner (7) zu veranlassen, das von der Treiberschaltung (2) an den Motor (1) angelegte (erste) Geschwindigkeitsantriebssignal zu modifizieren.

2. Steuersystem nach Anspruch 1, bei dem das das gewünschte Ausmaß der Winkelverschiebung darstellende Signal eine Impulsreihe aufweist, bei dem das die wahrgenommene, wirksame, momentane Winkelverschiebung des Motors darstellende Signal eine Folge von Impulsen aufweist, und bei dem die Differentialschaltung einen ersten Differentialzähler (6a) aufweist, der mit dem Winkelkodierer (4) und der Signaleingabeeinheit (5) verbunden ist, die Impulsreihe von der Signaleingabeeinheit und die folge von Impulsen von dem Winkelkodierer (4) empfängt, ein Signal erzeugt, welches eine erste Differentialzählung der Impulse von der Eingabeeinheit (5) und der Impulse von dem Winkelkodierer (4) darstellt, und das erste Differentialzählsignal an die Schnittstelle (10) anlegt, um es der Zentraleinheit (8) zu ermöglichen, entsprechend der ersten Differentialzählung ein erstes Modifikationssignal des (ersten) Geschwindigkeitsbefehlssignals auszuarbeiten, wodurch es dem Microrechner (7) ermöglicht wird, das von der Treiberschaltung (2) an den Motor (1) angelegte (erste) Geschwindigkeitsantriebssignal zu modifizieren; einen zweiten Differentialzähler (6b) aufweist, der mit dem Winkelkodierer (4) und der Schnittstelle (10) verbunden ist und das (erste) Geschwindigkeitsbefehlssignal in Form von Geschwindigkeitsbezugsimpulsen von der Zentraleinheit (8) des Mikrorechners (7) und die Folge von Ausgangsimpulsen von dem Winkelkodierer (4) empfängt und eine zweite Differentialzählung erzeugt, welche eine Differentialzählung der Geschwindigkeitsbezugsimpulse und einer Anzahl der Ausgangsimpulse des Winkelkodierers (4) pro Zeiteinheit ist, wobei die Anzahl der Ausgangsimpulse pro Zeitenheit einen Wert der wirksamen, momentanen Winkelgeschwindigkeit des Motors (1) angibt, und diese zweite Differentialzählung über die Schnittstelle (10) an die Zentraleinheit (8) des Mikrorechners (7) liefert, um dadurch dafür zu sorgen, daß das Geschwindigkeitsbefehlssignal an die Treiberschaltung (2) entsprechend der ersten und zweiten Differentialzählung modifiziert wird; und eine Unterbrechereinheit (12) aufweist, die dem Microrechner (7) zugeordnet ist und der Zentraleinheit (8) intermittierend ein Unterbrechungssignal zur Verfügung stellt, um es dadurch der Zentraleinheit (8) zu ermöglichen, die Modifizierung des Geschwindigkeitsbefehlssignals an die Treiberschaltung (2) entsprechend der ersten und zweiten Differentialzählung durchzuführen; wobei die Treiberschaltung (2) geeignet ist, als Geschwindigkeitsantriebssignal eine Serie von Geschwindigkeitsantriebsimpulsen mit einer Einschaltzeit und einer Ausschaltzeit zu liefern, wobei mindestens einer derselben von dem der Treiberschaltung (2) zugeführten Geschwindigkeitsbefehlssignal, modifiziert entsprechend der ersten und zweiten Differentialzählung, gesteuert verändert wird.

3. Motorsteuersystem mit: einem Steuersystem nach Anspruch 1 oder Anspruch 2 und einer von der Treiberschaltung (2) betätigten Elektromotoranordnung mit: einer Vorschubspindel (3); einer länglichen Mutter (106), die auf die Vorschubspindel (3) aufgeschraubt ist und sich axial längs derselben erstreckt; einem drehbaren Zylinder (103), der die Mutter (106) umgibt und mit derselben eine unter Fluiddruck setzbare Tasche (108) begrenzt, die als Druckmittel, welches den drehbaren Zylinder (103) mit der Mutter (106) koppelt, ein Öl oder einen elastomeren Stoff aufnimmt; einer Schraube (109), die auf die Mutter (106) und den drehbaren Zylinder (103) aufgeschraubt ist und das Druckmittel in der Tasche (108) einstellbar komprimiert; einem Rotor (102), auf den eine Spule aufgewickelt und an dem drehbaren Zylinder (103) angebracht ist, um eine Rotorwicklung zu bilden; einem den drehbaren Zylinder (103) umgebenden Zylindrischen Gehäuse, welches einen mit der Rotorwicklung zusammenwirkenden Stator bildet; Kommutatoren (110), die an dem drehbaren Zylinder (103) innerhalb des Gehäuses befestigt und mit dem Rotor (102) elektrisch verbunden sind; und Bürsten (111), die in dem Gehäuse federnd nachgiebig angebracht, von Federn (112) gegen die Kommutatoren (110) gedrängt sind und von Anschlüssen (113) mit dem Geschwindigkeitsantriebssignal von der Treiberschaltung (2) erregt werden.

# FIG. 1

# FIG. 2

# FIG. 3

0 034 033